Europäisches Patentamt

European Patent Office

Office européen des brevets

(11) Veröffentlichungsnummer: **0 400 365**
**A2**

## (12) EUROPÄISCHE PATENTANMELDUNG

(21) Anmeldenummer: **90108752.8**

(51) Int. Cl.5: **F16F 13/00**

(22) Anmeldetag: **09.05.90**

(30) Priorität: **30.05.89 DE 3917586**

(43) Veröffentlichungstag der Anmeldung:
**05.12.90 Patentblatt 90/49**

(84) Benannte Vertragsstaaten:
**DE ES FR GB IT**

(71) Anmelder: **METZELER Gesellschaft mit
beschränkter Haftung
Gneisenaustrasse 15
D-8000 München 50(DE)**

(72) Erfinder: **Kaiser, Franz-Josef
Südstrasse 2
D-5431 Bannberscheid(DE)**
Erfinder: **Sauer, Wolfgang, Dr.
Schulstr. 22
D-5419 Puderbach(DE)**

(74) Vertreter: **Michelis, Theodor, Dipl.-Ing.
Gneisenaustrasse 15
D-8000 München 50(DE)**

(54) Hydraulisch dämpfendes Zweikammer-Motorlager.

(57) Bei einem hydraulisch dämpfenden Zweikammer-Motorlager mit einer motorseitigen Arbeitskammer und einer Ausgleichskammer, die über einen Überströmkanal hydraulisch miteinander in Verbindung stehen, und bei dem der zentrale Bereich der Zwischenplatte durch eine Entkopplungsplatte gebildet ist, die an ihrem Außenumfang in einem diesen umgreifenden Käfig mit axialem Freiweg gelagert ist, ist zur Entkopplung kleiner Anregungsamplituden und einer Verbreiterung der Dämpfungscharakteristik erfindungsgemäß vorgesehen, daß die Entkopplungsplatte (20) topfförmig ausgebildet ist und mit ihrem Außenmantel (21) die radial innenliegende Wandung des an der Innenseite des Lagergehäuses (9) verlaufenden Überströmkanals (3) bildet und in ihrer unteren Stellung diesen verschließt, während bei einem Verschieben der Entkopplungsplatte (20) nach oben durch Freilegen der Spalte (31, 31) ein Bypass zum Überströmkanal (3) geschaffen ist.

FIG.1

## Hydraulisch dämpfendes Zweikammer-Motorlager

Die Erfindung bezieht sich auf ein hydraulisch dämpfendes Zweikammer-Motorlager mit einer motorseitigen Arbeitskammer und einer durch eine Zwischenplatte abgetrennten Ausgleichskammer, wobei Arbeits- und Ausgleichskammer über einen in der Zwischenplatte verlaufenden Überströmkanal hydraulisch miteinander in Verbindung stehen und der zentrale Bereich der Zwischenplatte durch eine Entkopplungsplatte gebildet ist, die an ihrem Außenumfang in einem diesen umgreifenden Käfig mit axialem Freiweg gelagert ist.

Hydraulisch dämpfende Motorlager sind in vielfältiger Weise, beispielsweise aus der DE-A-37 31 495, bekannt. Eine hohe Dämpfung wird dabei durch eine entsprechende Länge des Überströmkanals, der in mehreren Wendeln übereinander verlaufen kann, erreicht. Zur zusätzlichen Entkopplung kleiner Anregungsamplituden ist es dabei üblich, eine zentrale Entkopplungsmembran vorzusehen, wobei diese Entkopplungsmembran beispielsweise entsprechend der DE-A 27 27 244 auch in einem Käfig fliegend gelagert sein kann, so daß sie ggf. auch zusätzlich von Flüssigkeit umströmt wird.

Die Dämpfungscharakteristik eines solchen Lagers ist dabei im allgemeinen vorgegeben durch Länge und Querschnitt des Überströmkanals sowie die Viskosität der verwendeten Flüssigkeit, wobei das gedämpfte Frequenzspektrum prak tisch festgelegt ist und sich nur über einen relativ schmalen Bereich erstreckt.

Aufgabe der vorliegenden Erfindung ist es demgegenüber, eine sehr wirksame Entkopplung kleiner Anregungsamplituden bei gleichzeitiger Verbreiterung der Dämpfungscharakteristik des Lagers bei bestimmten Amplituden zu erreichen.

Zur Lösung dieser Aufgabe ist erfindungsgemäß vorgesehen, daß die Entkopplungsplatte topfförmig ausgebildet ist und mit ihrem Außenmantel die radial innenliegende Wandung des an der Innenseite des Lagergehäuses verlaufenden Überströmkanals bildet und in ihrer unteren Stellung diesen verschließt.

Durch diese topfförmige Ausbildung der Entkopplungsplatte, die mit ihrem angenähert zylindrisch verlaufenden Wandungsbereich die Innenseite des Überströmkanals bildet, wird erreicht, daß bei Ansteigen des Druckes in der Arbeitskammer die Entkopplungsplatte nach unten gedrückt wird und damit den Überströmkanal radial nach innen verschließt, so daß eine hohe Dämpfung ereicht wird, während bei Einwirken von Zugkräften diese Entkopplungsplatte angehoben wird und ein Spalt auf der Innenseite des Überströmkanals freigegeben wird, der somit einen Bypass zu diesem Kanal für die hydraulische Flüssigkeit bildet, wodurch die Dämpfungscharakteristik des Lagers verbreitert wird.

Zweckmäßig ist es dabei, wenn der Außenmantel der topfförmigen Entkopplungsplatte konisch zulaufend ausgebildet ist.

Zur besseren Abdichtungwirkung kann die Entkopplungsplat te ferner zumindest im Bereich ihres Außenmantels mit einer schichtförmigen Gummiauflage versehen werden.

Der Überströmkanal selbst weist zweckmäßigerweise einen zylindrischen, am Lagergehäuse festgelegten Einsatz mit mehreren, sich radial nach innen erstreckenden, ringscheibenförmigen Trennwänden auf, an die innenseitig dann der Außenmantel der Entkopplungsplatte angrenzt.

Zweckmäßig ist es, wenn der Überströmkanal mehrwendelig ausgebildet ist und dabei die radialen Trennwände in ihrer Breite von oben nach unten entsprechend der Konizität der topfförmigen Entkopplungsplatte zunehmen.

Zur Halterung dieser Entkopplungsplatte kann auf der oberen radialen Trennwand ein nach innen offener Winkelring angeordnet sein, der die radial nach außen umgebördelte und mit einer Gummiwulst ummantelte Oberkante der topfförmigen Entkopplungsplatte mit Spiel umfaßt.

Die Einrittsöffnung von der Arbeitskammer in den Überströmkanal wird zweckmäßigerweise durch eine Öffnung im Mantel der Entkopplungsplatte gebildet.

Bezüglich der Ausbildung der Entkopplungsplatte selbst kann bei dieser der Boden zylindrisch eingezogen sein, oder aber die Entkopplungsplatte besteht aus einem konischen Mantel und einer in etwa halber Höhe eingesetzten ebenen Platte, um damit durch die Höhersetzung des Bodens ein größeres Volumen für die Ausgleichskammer zu erhalten.

Diese in halber Höhe eingesetzte Platte kann eine zentrale Öffnung aufweisen, die mit einer elastischen Gummimembran abgeschlossen ist, um damit eine zusätzliche Entkopplung zu bewirken.

Anhand einer schematischen Zeichnung sind Aufbau und Funktionsweise von Ausführungsbeispielen nach der Erfindung näher erläutert. Dabei zeigen

Fig. 1 einen Längsschnitt durch ein Zweikammer-Motorlager mit einer topfförmigen Entkopplungsplatte mit konischem Mantel,

Fig. 2 eine weitere Gestaltung einer derartigen Entkopplungsplatte und

Fig. 3 einen Querschnitt durch den Überströmkanal-Einsatz mit einer Entkopplungsplatte mit zylindrischem Mantel.

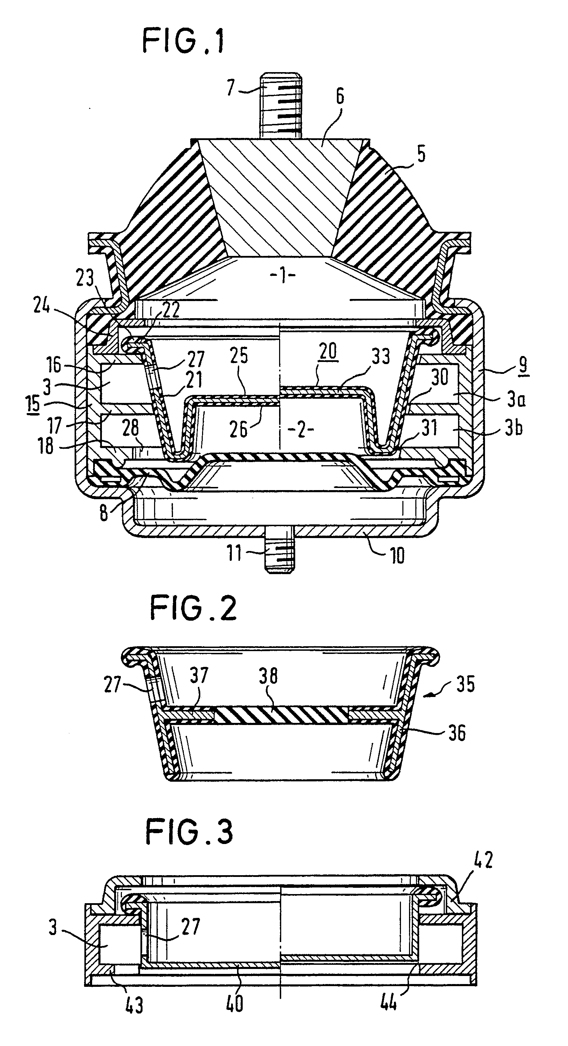

Wie aus Fig. 1 zu ersehen ist, weist das Zweikammer-Motorlager zunächst in herkömmlicher Weise eine obere motorseitige Arbeitskammer 1 und eine Ausgleichskammer 2 auf, die über einen noch zu beschreibenden Überströmkanal 3 miteinander in Verbindung stehen. Die obere Arbeitskammer 1 wird von einer starkwandigen, hohlkegelförmigen Kammerwandung 5, der sogenannten Tragfeder, begrenzt, die an ihrer oberen Stirnseite eine Lagerplatte 6 mit einem Bolzen 7 zur Festlegung am nicht näher dargestellen Motor aufweist. Die untere Ausgleichskammer 2 ist von einer beispielsweise tassenförmigen Kammerwandung 8 aus ebenfalls gummielastischem, jedoch weicherem Material als das der Kammerwandung 5 gebildet. Alle Lagerteile sind über ein zylindrisches Gehäuse 9 flüssigkeitsdicht miteinander verspannt, wobei das Gehäuse 9 gleichzeitig den unteren Gehäusedeckel 10 mit einem Anschlußbolzen 11 zum Festlegen des Lagers an der Fahrzeugkarosserie mit umfaßt.

Der Überströmkanal 3 ist nun auf folgende Weise gebildet und begrenzt. Angrenzend an die Innenwandung des Gehäuses 9 ist ein zylindrischer Einsatz 15 mit drei sich radial nach innen erstreckenden ringscheibenförmigen Trennwänden 16, 17 und 18 festgelegt, von denen die einzelnen Windungen 3a und 3b des Überströmkanals 3 begrenzt werden. Konzentrisch zu diesen Trennwänden 16, 17 und 18 ist eine topfförmige Entkopplungsplatte 20 angeordnet, die mit ihrem konusförmigen Außenmantel 21 den Überströmkanal 3 radial nach innen begrenzt und damit praktisch die radial innenliegende Wandung bildet.

Diese Entkopplungsplatte 20 ist mit ihrem oberen, nach außen umgebördelten Rand 22, der von einer Gummiauflage 23 ummantelt ist, in einem Käfig aufgehängt, der von einem auf der oberen radialen Trennwand 16 aufgesetzten, nach innen offenen Winkelring 24 gebildet wird, und der den Rand 22 mit Spiel umfaßt. Dabei sind auch die übrigen Flächen der Entkopplungsplatte 20 mit einer schichtförmigen Gummiauflage 25 bzw. 26 versehen.

Im Bereich der oberen Windung 3a des Überströmkanals 3 ist der Mantel 21 der Entkopplungsplatte 20 mit einer radialen Öffnung 27 versehen, die als Eintrittsöffnung für die hydraulische Flüssigkeit von der Arbeitskammer 1 in den Überströmkanal 3 dient. Die Trennwand 17 ist im Bereich ihres Umfangs mit einem nicht näher dargestellten Durchlaß zur unteren Windung 3b des Überströmkanals 3 versehen, wobei dann in der unteren Trennwand 18 eine Aussparung 28 als Auslaß für die hydraulische Flüssigkeit in die Ausgleichskammer 2 eingeschnitten ist.

Die Funktionsweise eines so aufgebauten Lagers ist nunmehr die folgende: Steigt der Druck in der Arbeitskammer 1 beispielsweise durch Einfederung der Tragfeder 5, so verschiebt sich die Entkopplungsplatte 20 nach unten, bis sie mit ihrem gummiummantelten Außenmantel 21 jeweils auf den Trennwänden 17 und 18 aufliegt und damit den Überströmkanal 3 radial nach innen verschließt. Dadurch ist die Flüssigkeit gezwungen, über die Eintrittsöffnung 27 durch die beiden Windungen 3a und 3b des Überströmkanals 3 zu strömen und über die Austrittsöffnung 28 in die Ausgleichskammer 2 auszutreten.

Wirken nunmehr jedoch Zugkräfte auf die Lagerplatte 6 des Motorlagers ein, so vergrößert sich das Volumen der Arbeitskammer 1 unter Druckabsenkung, wobei die Entkopplungsplatte 20 bis zu ihrem oberen Anschlag im Winkelring 24 angehoben wird. Dadurch ergeben sich - wie auf der rechten Seite von Fig. 1 dargestellt - zwischen den radial innenliegenden Kanten der Trennwände 17 und 18 und dem konusförmigen Mantel 21 der Entkopplungsplatte 20 Ringspalten 30 und 31, die einen Kurzschluß und damit einen Bypass zum Überströmkanal 3 bilden. Das bedeutet, daß die Flüssigkeit sowohl durch die Eintrittsöffnung 27 als auch entlang des Außenmantels 21 der Entkopplungsplatte 20 über die Ringspalten 30 und 31 direkt in die Kanalwindungen 3a und 3b des Überströmkanals strömt, so daß dadurch eine kürzere Kanallänge entsteht. Diese kürzere Kanallänge bewirkt ein Phasenwinkelmaximum bei höheren Frequenzen von etwa 20 - 40 Hz und verbreitert damit die gesamte Dämpfungscharakteristik in einer vollen Schwingungsperiode.

Bei dem in Fig. 1 dargestellten Ausführungsbeispiel weist die topfförmige Entkopplungsplatte 20 einen zylindrisch eingezogenen Boden 33 auf, der etwa in halber Höhe des konischen Mantels 21 verläuft. Durch diese Einziehung wird ein größeres Volumen für die Ausgleichskammer 2 geschaffen.

Eine andere konstruktive Gestaltung ist mit der Entkopplungsplatte 35 nach Fig. 2 gezeigt. Danach weist die Entkopplungsplatte 35 einen konischen Mantel 36 auf, in den etwa in halber Höhe eine ebene Platte 37 eingesetzt ist. Diese ebene Platte 37 kann dabei eine zentrale Öffnung aufweisen, die mit einer elastischen Gummimembran 38 abgeschlossen ist, um damit noch eine zusätzliche Amplitudenentkopplung zu ermöglichen.

Bei einem Motorlager, bei dem nur ein relativ kurzer Überströmkanal 3 erforderlich ist, ist auch eine Anordnung und Ausbildung der Entkopplungsplatte nach Fig. 3 möglich, in der lediglich der Zwischenplattenbereich des Lagers mit Enkopplungsplatte dargestellt ist.

Danach ist nur ein Überströmkanal 3 mit einer einzigen Windung vorgesehen, in die zentral eine topfförmige Entkopplungsplatte 40 mit einem zylindrischen Mantel 41 eingesetzt ist. Die Entkopplungsplatte 40 ist dabei in gleicher Weise in einem Käfig 42 gehaltert. Der zylindrische Mantel 41 reicht dabei bis nur zur unteren Trennwand 43 des Überströmkanals 3. Bei einer Druckabsenkung in der Arbeitskammer 1 wird dann die Entkopplungsplatte 40 sich nach oben bewegen, wie das im rechten Teil der Zeichnung dargestellt ist, und dabei einen Spalt 44 zwischen der Außenkante der Entkopplungsplatte 40 und der unteren Trennwand 43 des Überströmkanals 3 freigeben, so daß sich dabei ebenfalls ein Bypass von sehr kurzer Kanallänge ergibt.

Mit der beschriebenen Ausbildung des hydraulisch dämpfenden Zweikammer-Motorlagers ist es also auf einfache Weise möglich, bei bestimmten Druckverhältnissen und Druckverläufen im Lager durch einen zusätzlichen Überströmspalt entlang des Kanals eine Verbreiterung der Dämpfungscharakteristik zu schaffen, um damit die Wirkungsweise des Lagers zu optimieren.

**Ansprüche**

1. Hydraulisch dämpfendes Zweikammer-Motorlager mit einer motorseitigen Arbeitskammer und einer durch eine Zwischenplatte abgetrennten Ausgleichskammer, wobei Arbeits- und Ausgleichskammer über einen, in der Zwischenplatte verlaufenden Überströmkanal hydraulisch miteinander in Verbindung stehen und der zentrale Bereich der Zwischenplatte durch eine Entkopplungsplatte gebildet ist, die an ihrem Außenumfang in einem diesen umgreifenden Käfig mit axialem Freiweg gelagert ist, dadurch gekennzeichnet, daß die Entkopplungsplatte (20; 35; 40) topfförmig ausgebildet ist und mit ihrem Außenmantel (21; 36; 41) die radial innenliegende Wandung des an der Innenseite des Lagergehäuses (9) verlaufenden Überströmkanal (3) bildet und in ihrer unteren Stellung diesen verschließt.

2. Motorlager nach Anspruch 1, dadurch gekennzeichnet, daß der Außenmantel (21; 36) der topfförmigen Entkopplungsplatte (20; 35) konisch zulaufend ausgebildet ist.

3. Motorlager nach Anspruch 1 oder 2, dadurch gekennzeichnet, daß die Entkopplungsplatte (20; 35) zumindest im Bereich ihres Außenmantels (21, 36) mit einer schichtförmigen Gummiauflage (25, 26) versehen ist.

4. Motorlager nach Anspruch 1 oder 2, dadurch ge kennzeichnet, daß der Überströmkanal (3) einen zylindrischen, am Lagergehäuse (9) festgelegten Einsatz (15) mit mehreren, sich radial nach innen erstreckenden, ringscheibenförmigen Trennwänden (16, 17, 18) aufweist.

5. Motorlager nach Anspruch 2, dadurch gekennzeichnet, daß der Überströmkanal (3) mehrwendelig (3a, 3b) ausgebildet ist und die radialen Trennwände (16, 17, 18) in ihrer Breite von oben nach unten entsprechend der Konizität der topfförmigen Entkopplungsplatte (20, 35) zunehmen.

6. Motorlager nach Anspruch 4 oder 5, dadurch gekennzeichnet, daß auf der oberen radialen Trennwand (16) ein nach innen offener Winkelring (24) angeordnet ist, der die radial nach außen umgebördelte und mit einer Gummiwulst (23) ummantelte Oberkante (22) der topfförmigen Entkopplungsplatte (20) mit Spiel umfaßt.

7. Motorlager nach Anspruch 1 oder 2, dadurch gekennzeichnet, daß die Eintrittsöffnung von der Arbeitskammer (1) in den Überströmkanal (3) durch eine Öffnung (27) im Mantel (21) der Entkopplungsplatte (20) gebildet ist.

8. Motorlager nach Anspruch 1 oder 2, dadurch gekennzeichnet, daß der Boden (33) der topfförmigen Entkopplungsplatte (20) zylindrisch eingezogen ist.

9. Motorlager nach Anspruch 1 oder 2, dadurch gekennzeichnet, daß die topfförmige Entkopplungsplatte (35) aus einem konischen Mantel (36) und einer in etwa halber Höhe eingesetzen ebenen Platte (37) besteht.

10. Motorlager nach Anspruch 9, dadurch gekennzeich net, daß die Platte (37) eine zentrale Öffnung aufweist, die mit einer elastischen Gummimembran (38) abgeschlossen ist.

FIG.1

FIG.2

FIG.3